# FASCICULE DE BREVET EUROPEEN

(11) **EP 0 536 067 B1**
(45) Date de publication et mention de la délivrance du brevet: **10.01.1996**
(21) Numéro de dépôt: 92420342.5
(22) Date de dépôt: 30.09.1992
(51) Int. Cl.: B23Q 3/10

(54) **Dispositif de positionnement et de serrage modulaire**
Modulare Vorrichtung zum Ausrichten und Halten
Modular positioning and clamping unit

(30) Priorité: 03.10.1991 FR 9112393
(43) Date de publication de la demande: 07.04.1993
(73) Titulaire: GERARD GORSE EQUIPEMENTS DE MACHINES-OUTILS S.A., F-39570 Perrigny (FR)
(72) Inventeur: Gorse, Gérard, F-39000 Lons-le-Saunier (FR); Borne, Philippe, F-39000 Lons-le-Saunier (FR)
(74) Mandataire: Moinas, Michel

(56) Documents cités:
- DE-A- 2 155 806
- DE-A- 3 341 542
- GB-A- 1 265 960
- US-A- 4 640 501

## Description

La présente invention est relative à un dispositif permettant de positionner et maintenir une pièce à usiner sur la table ou sur une face utile d'un bloc de maintien d'une machine-outil, et plus particulièrement à un dispositif comprenant une plaque dont la surface présente un maillage d'orifice ou de rainure pour le montage de divers éléments de positionnement et de serrage de la pièce à usiner, laquelle plaque est elle-même installée sur la table ou bloc de maintien.

Ce type de serrage, communément appelé "modulaire" et décrit par exemple dans les documents DE 3 301 178 ou EP 0 074 565, permet de réaliser un serrage ferme et précis quelle que soit la forme complexe de la pièce à usiner, et ce grâce aux différents éléments modulaires d'appui rapportés sur la plaque tels que butée, règle ou roulette d'appui et autres éléments de serrage tels que bec, came ou crampon. Ce type de serrage est aussi intéressant en ce qu'il permet de respecter les règles de l'isostatisme définissant la répartition des charges sur les différents points de contact de la pièce grâce aux éléments d'appui réglables.

Toutefois, ce type de serrage nécessite le maintien d'un stock important d'éléments de composition dont la mise en oeuvre sur une plaque peut être longue et fastidieuse. De plus, le serrage s'effectue en actionnant manuellement l'un après l'autre une pluralité de cames ou de crampons, ce qui peut être lent et sujet à erreurs causant alors un déséquilibre entre les points d'appui. De plus, une grande partie de ces éléments de serrage n'ont qu'une faible surface d'appui et sont souvent limités en hauteur.

On connaît par ailleurs les étaux comprenant une base supportant un mors fixe et à l'intérieur duquel peut être déplacé un coulisseau au moyen d'une broche traversante mobile en rotation dont l'extrémité filetée est engagée dans un écrou solidaire de la base, ce coulisseau supportant un mors mobile vis-à-vis du mors fixe. Outre son coût relativement raisonnable par rapport à un dispositif modulaire, un étau peut être serré ou desserré aisément, rapidement et offre également une puissance de serrage importante dont on peut régler l'intensité en passant, éventuellement, au travers d'un mécanisme d'amplification mécanique. Les étaux se prêtent à l'automatisation par utilisation de vérins hydrauliques pour déplacer le coulisseau portant le mors mobile.

Par contre, les mors de serrage étant usuellement de faible hauteur et n'exerçant une force de serrage qu'en deux points sur un seul axe, il est très difficile de respecter les règles d'isostatisme lors du positionnement de la pièce. Des formes diverses données au mors de base ou à des mors rapportés : obliques vers le bas, en V ou palonnés, ne peuvent compenser que très partiellement ce défaut de contrôle de l'appui d'une pièce.

Il est connu d'installer un ou plusieurs étaux sur une plaque intermédiaire modulaire pour bénéficier d'une part de la puissance de serrage et éventuellement d'une automatisation par vérin hydraulique et d'autre part de la rapidité de positionnement devant l'outil de la machine d'une pièce pré-installée sur une plaque modulaire. Toutefois, les inconvénients inhérents aux étaux subsistent, et de plus, l'encombrement des éléments de serrage par rapport au volume de la pièce est particulièrement augmenté ce qui, en d'autres termes, se traduit par une perte importante de surface utile pour le travail de l'outil. Cette combinaison n'est, en général, utilisée que pour des pièces lourdes de formes géométriques relativement simples donc faciles à caler.

Le document DE 2 155 806 décrit un étau susceptible d'être installé sur une table de machine-outil. Cet étau comprend un corps de base formant, dans son épaisseur, un logement ouvert uniquement dans sa partie supérieure. Ce logement contient un coulisseau sous la forme d'un axe cannelé tenu qu'en ses deux extrémités, et pouvant être déplacé par la rotation d'une vis engagée dans un taraudage ménagé dans sa première extrémité, et ce contre l'effet d'un ressort agissant contre son autre extrémité. Dans l'une des cannelures de cet axe sont engagées en une position prédéterminée les pinces de liaison d'un mors qui est donc mobile avec l'axe cannelé, et ce en vis-à-vis d'un mors fixe, lequel est situé exclusivement sur la paroi frontale du corps de base.

Toutefois, l'assise du mors mobile étant limitée à sa surface de contact avec les parois du logement, en l'occurrence sur moins du tiers de la longueur de ce logement, la hauteur de ce mors ne peut que rester faible. Cet étau ne pouvant appliquer qu'une force de serrage en deux points d'un axe horizontal, il est très difficile de respecter les règles d'isostatique lors du positionnement de la pièce à usiner. De plus, la majeure partie du logement est ouverte sur le haut. On a alors un risque important de pénétration de copeaux dans le corps de l'étau entraînant assez rapidement le blocage du déplacement du mors mobile.

Dans le document GB 1 265 960, considéré comme l'état de la technique le plus proche, est divulguée une plaque pleine hormis deux logements ménagés dans son épaisseur parallèlement à la surface, ces logements étant ouverts dans leur partie supérieure et traversant la longueur de la plaque. Chaque logement contient un coulisseau dont la face supérieure supporte un mors mobile en vis-à-vis d'un mors unique fixé dans la largeur a l'extrémité de la plaque. Le mors fixe est complété par une première butée fixe en l'une de ses extrémités et par une seconde butée dont on peut régler la position.

Toutefois, la possibilité de calage simultanément dans les sens longitudinal et latéral est uniquement présente au niveau du mors fixe, ce qui est nettement insuffisant dès que la pièce à usiner est courbe. Le serrage d'une telle pièce par le seul mors mobile peut alors induire un travers dans la position finale. De plus, la hauteur des mors étant faible, cette plaque ne peut pas recevoir de pièce dont la face inférieure de repos présente des niveaux différents par paliers.

De plus, la longueur de coulisseau supportant le mors fixe étant standard, une partie importante du logement reste ouverte en permanence, laissant ainsi la broche filetée de la manoeuvre du coulisseau exposée aux copeaux et autres saletés. Cette broche est alors sujette à coïncement.

Le but de la présente invention est un dispositif de serrage rapide permettant de respecter les règles de l'isostatisme quelles que soient les diverses formes complexes prises par les pièces à usiner dans leur longueur, largeur et hauteur. Ce dispositif de serrage doit pouvoir également assurer un serrage puissant et un maintien rigide quel que soit l'angle d'attaque de l'outil de la machine.

Un autre but de l'invention est un dispositif de serrage qui soit également modulaire quant au type d'entraînement de l'élément mobile de serrage, c'est-à- dire qui permette de passer d'un entraînement mécanique simple à un entraînement assisté hydrauliquement ou pneumatiquement ou à un entraînement à amplification de force.

Ces buts sont réalisés grâce à une plaque prévue pour être installée sur une table ou un bloc de maintien d'une machine-outil et comprenant, dans son épaisseur, au moins un logement parallèle à la surface, ouvert dans sa partie supérieure et traversant une longueur ou une largeur de la plaque, ce logement contenant un coulisseau mobile dont la face supérieure supporte un mors vis-à-vis d'un mors fixé dans la plaque, le coulisseau pouvant être déplacé grâce à des moyens mécaniques ou hydrauliques, du fait qu'elle présente, sur sa surface, un maillage d'orifices ou de rainures pour le montage d'éléments de positionnement et de serrage de pièces à usiner, et du fait que le coulisseau présente une longueur au moins supérieure à la moitié de la longueur du logement, ainsi qu'une suite d'orifices ou de dents sur sa surface supérieure pour la fixation en une position prédéterminée du mors mobile.

Avantageusement, le maillage d'orifices ou de rainures prévu pour le montage d'éléments de positionnement et de serrage comporte des rainures ou des suites longitudinales d'orifices dont les positions dans la surface de la plaque sont calibrées. Avantageusement encore, les mors mobile et fixe ont une hauteur supérieure à 4 cm, et en ce que leurs faces en vis-à-vis sont complétées par un maillage d'orifices ou de rainures pour le montage d'éléments complémentaires de positionnement et/ou de stabilisation des pièces à usiner.

Les mors fixes et mobiles permettent ainsi une saisie rapide et puissante d'une pièce a usiner préalablement calée avec précision contre des éléments d'appui disposés au même niveau que les mors, mais en des positions spécifiques selon la forme de cette pièce et les règles de l'isostatisme. Si nécessaire, des éléments modulaires de serrage peuvent même venir compléter transversalement ou obliquement le serrage principal.

De plus, la possibilité de prédisposer aussi bien le mors fixe que le mors mobile, en plus de la course déjà importante du coulisseau, augmente grandement la polyvalence du dispositif de serrage. Par ailleurs, les coulisseaux pouvant être relativement longs : soit équivalent à la moitié voire mieux les deux tiers de la longueur du logement, les mors peuvent alors présenter une hauteur importante, supérieure à 4 cm et pouvant aller jusqu'à la valeur de l'entraxe entre deux coulisseaux, ce qui permet de compléter également la face active verticale du mors par un maillage d'orifices ou de rainures pour le montage d'éléments complémentaires de positionnement et/ou de stabilisation en fonction de la forme locale de la pièce saisie par ce mors.

Avantageusement, un mors peut être constitué d'une plaque assez large rapportée sur la face supérieure du coulisseau, et dont sa propre face supérieure présente également un maillage d'orifices dont les caractéristiques peuvent être similaires à celles de la plaque modulaire. En alternative, un mors peut avoir une forme générale parallélépipédique ou cubique, les faces latérale, supérieure et frontale présentant également un maillage pouvant avoir les mêmes caractéristiques de celles de la plaque modulaire. Des éléments de positionnement, tels que réglettes, butées, appuis coulissants, sont alors prévus généralement plus bas et plus courts que la moyenne usuelle pour être montés sur ces mors et/ou sur la plaque modulaire proche des mors.

Utilement, la sortie du logement est constituée par un alésage formant une chambre importante pour l'aménagement de moyens complémentaires interchangeables de déplacement hydraulique du coulisseau ou d'amplification mécanique de serrage. Alors, un ou plusieurs conduits hydrauliques sont ménagés à demeure dans l'épaisseur de la plaque modulaire et débouchent au fond de la chambre de chaque logement. Cette localisation de cette chambre, sous la position usuelle du mors fixe, permet de préserver la longueur importante du coulisseau, donc du choix initial de la position du mors mobile et de la rigidité de l'ensemble coulisseau/mors lors d'un serrage important. La création de conduits hydrauliques internes une fois pour toute dans l'épaisseur de la plaque modulaire permet l'utilisation, inhabituelle pour ce type de dispositif modulaire, de moyens hydrauliques de serrage tout en préservant la surface maillée pour la disposition d'éléments complémentaires.

Des moyens de déplacement hydrauliques du coulisseau peuvent comprendre un cylindre positionné au fond de la chambre par un couvercle de fermeture de telle sorte que son conduit hydraulique interne soit en correspondance avec le conduit de la plaque modulaire, cylindre contenant un piston prolongé en son extrémité orientée vers l'intérieur du logement par un tube taraudé dans lequel est engagée l'extrémité de la broche, lequel piston est maintenu en position rentrée par des moyens de rappel prenant appui contre le couvercle.

Utilement, le coulisseau avec sa broche et la pièce taraudée intérieurement sont démontables hors du logement afin de permettre l'accès à des moyens de fixation ménagés dans la base de ce logement pour l'installation de la plaque modulaire sur la table ou sur un bloc cubique ou équerre de maintien de la machine-outil. Grâce à cet agencement, il est possible d'accoler, sans interférence, plusieurs plaques modulaires côte à côte sur une même table de machine-outil selon les besoins. Cette caractéristique peut s'avérer particulièrement avantageuse dans le cas de plaques longitudinales ne comportant qu'un, voire deux coulisseaux côte à côte.

Avantageusement encore, la partie supérieure de l'extrémité du coulisseau proche du mors fixe est prolongée par une plaque horizontale passant dans une rainure ménagée dans la surface de la plaque modulaire ou par-dessus une pièce située à l'extrémité de la chambre. Cette plaque complémentaire permet d'éviter la pénétration de copeaux à l'intérieur du logement et préserve ainsi le bon fonctionnement du mécanisme sous-jacent.

L'invention sera mieux comprise à l'étude de mode de réalisation pris à titre d'exemple nullement limitatif et décrit par les figures suivantes :
- la figure 1 est une vue du dessus d'une plaque modulaire selon l'invention,
- la figure 2 est une vue en coupe selon la ligne 1-1 de la figure 1 d'une variante mécanique de l'invention,
- la figure 3 est une vue en coupe selon la ligne 1-1 de la figure 1 d'une variante hydraulique de l'invention,
- la figure 4 illustre différents éléments de serrage complétant avantageusement la plaque modulaire selon l'invention,
- la figure 5 illustre en perspective l'extrémité d'une plaque modulaire complétée par des mors maillés cubiques, et
- la figure 6 illustre en perspective un assemblage exhaustif de mors et d'éléments d'appui sur une plaque modulaire étroite comprenant un unique coulisseau.

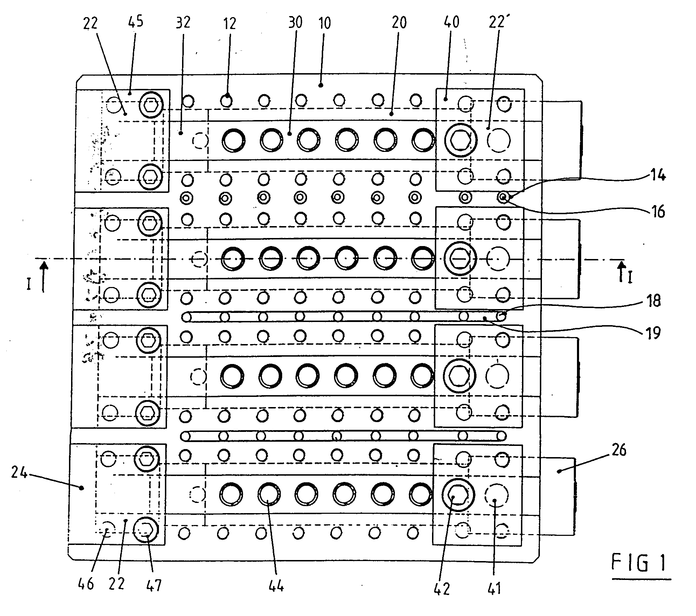

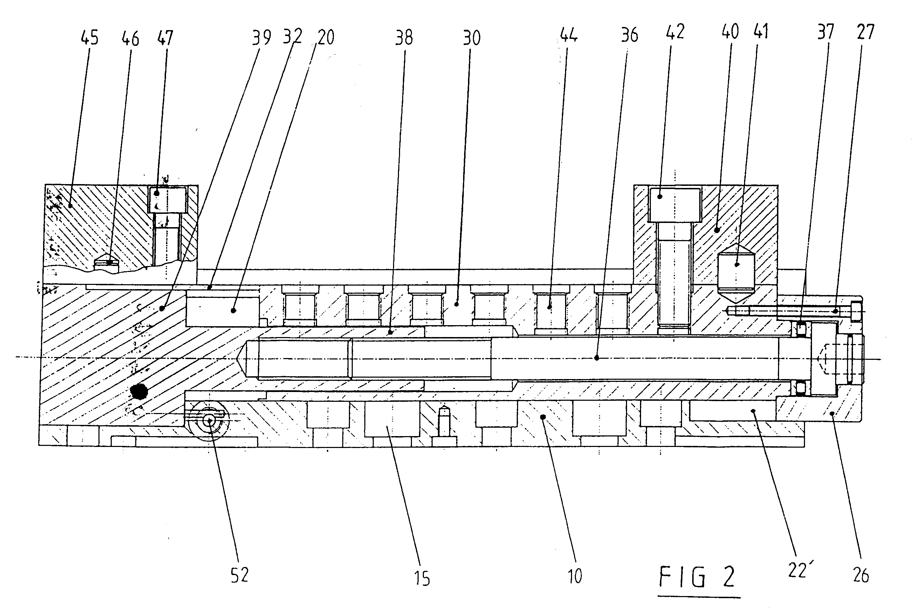

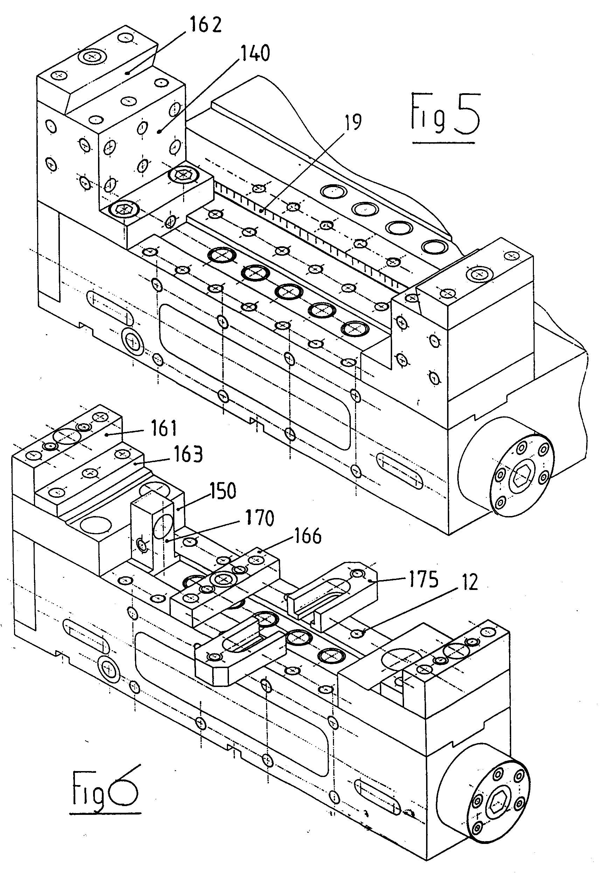

En référence aux figures 1 et 2, la plaque modulaire 10 présente un maillage d'orifices 12 pour le positionnement et la fixation d'éléments de positionnement et de serrage rapportés dont quelques exemples sont illustrés sur les figures 5 et 6. Ce maillage peut également comprendre des séries d'orifices calibrés, c'est-à-dire dont la partie supérieure (14) lisse a été usinée avec une grande précision de position, et dont la partie inférieure (16) comporte un taraudage pour le maintien de l'élément de positionnement. En complément ou en alternative, ce maillage peut comprendre des rainures calibrées (19) dont le fond est percé d'une pluralité d'orifices taraudés (18).

Ce maillage présente des rangées bordant l'ouverture supérieure de logements 20 parallèles et équidistants traversant de part en part latéralement (ou longitudinalement) la plaque modulaire 10. Ces logements ont une section transversale en forme de T renversé, la base débouchant dans la surface pour constituer l'ouverture supérieure de ce logement. L'entrée et la sortie latérale de chacun de ces logements sont alésées pour faire apparaître des chambres circulaires symétriques 22 et 22'.

Dans chaque logement 20 est installé un coulisseau longitudinal 30 de section transversale en T inversé complémentaire à celui du logement. Comme illustré sur les figures 1 et 2, la longueur de ce coulisseau est plus importante qu'usuellement : au moins la moitié de la longueur du logement 20, voire les deux tiers ou les trois-quarts. La surface supérieure de ce coulisseau peut ou ne pas affleurer la surface de la plaque modulaire 10. Cette face supérieure du coulisseau présente une rangée d'orifices taraudés 44 dont les embouchures sont alésées avec précision.

Sur la face supérieure de ce coulisseau est fixé un mors mobile 40 au moyen d'un boulon 42 pénétrant dans le taraudage d'un orifice 44 et d'une goupille 41 prenant place dans l'alésage supérieur de l'orifice 44 suivant. L'intérêt de cette rangée d'orifices 44 est de pouvoir positionner le mors mobile 40 au choix dans l'une des positions discrètes disponibles le long de ce coulisseau. En vis-à-vis de ce mors mobile 40 est installé un mors fixe 45 au moyen d'une paire de boulons 47 s'engageant dans le taraudage d'une paire d'orifices 12 en correspondance de la rangée bordant l'ouverture supérieure du logement 20. Cette fixation est également complétée par l'engagement d'une paire de goupilles 46 dans l'embouchure alésée d'une paire d'orifices 12 voisine en arrière de la précédente. Ainsi, la paire de rangées d'orifices 12 bordant le logement 20 permet de positionner au préalable le mors fixe 45 selon les besoins de manière analogue au mors mobile. Comme on peut aisément le comprendre, les goupilles supportent les efforts de cisaillement apparaîssant entre les mors et leurs pièces de maintien lors du serrage axial, alors que les boulons supportent une traction dans le sens de leur longueur due à une tension de fléchissement respectivement vers l'arrière de chacun des mors.

Comme on peut aisément le comprendre, une pièce à usiner peut alors être positionnée très exactement et avec une grande rapidité sur trois plans : contre un premier plan vertical constitué par le mors fixe, contre un second plan vertical constitué par une ou une série de butées fixées dans la rangée d'orifices calibrés adjacente, et assis sur un plan plus ou moins horizontal réalisé par des appuis fixés dans les orifices situés de part et d'autre du coulisseau.

Sur la figure 2 est illustré un mode d'entraînement mécanique du coulisseau 30 au moyen d'une broche 36 la traversant. Cette broche est tenue mobile en rotation grâce à une couronne située en son extrémité prise entre un palier 37 et un couvercle 26 qui est attaché au coulisseau 30 au moyen de six vis 27 réparties circulairement. Cette broche peut être tournée sur elle-même au moyen d'une clé pénétrant dans un orifice hexagonal ménagé dans l'extrémité de cette broche. L'autre extrémité filetée est engagée dans un tube taraudé 38 prolongeant une pièce de maintien circulaire 39 fixée dans la chambre 22.

L'avantage de cette structure entièrement démontable est de pouvoir accéder, une fois le coulisseau 30 avec sa broche 36 ainsi que la pièce 39 avec son prolongement tubulaire taraudé 38 retirés, à des orifices 15 sous-jacents ménagés au fond de la plaque modulaire 10 permettant l'accrochage de cette plaque dans une table de machine-outil ou sur un bloc cubique de maintien. Plus particulièrement, ces orifices 15 présentent en leurs parties supérieures un alésage pour la tête des boulons de telle sorte qu'elles n'interfèrent pas avec le déplacement du coulisseau 30.

Par ailleurs, une fine plaque horizontale 32 prolongeant le bord supérieur du coulisseau 30 passe par-dessus la pièce 39 dans une rainure ménagée sur sa face supérieure. Ainsi, l'intérieur du logement 20 se trouve en permanence isolé des copeaux de métal ou autres poussières.

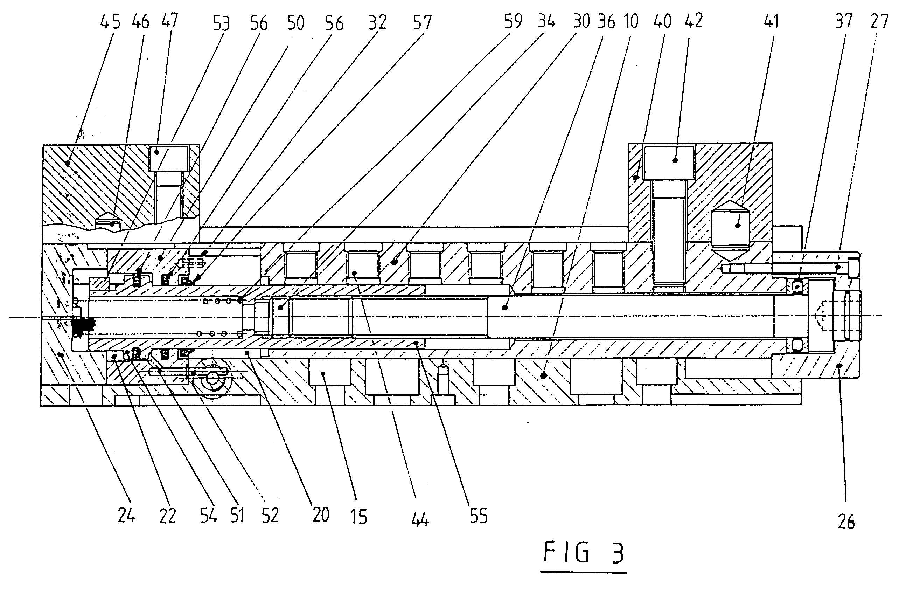

La figure 3 illustre une variante hydraulique pour l'entraînement du coulisseau 30. Sur cette figure, les pièces similaires sont désignées par des références identiques. Comme on peut le constater sur la partie gauche, le bloc de maintien 39 précédent est remplacé par un cylindre 56 à l'intérieur duquel peut être déplacé longitudinalement un piston 54. Ce piston est prolongé en son extrémité orientée vers l'intérieur du logement 20 par un tube taraudé 55 dans lequel est engagée l'extrémité filetée de la broche 36. Le piston est maintenu en rotation à l'intérieur du cylindre par une clavette 53.

Selon l'invention, la plaque modulaire 10 comprend, à demeure, un conduit hydraulique 52 composé d'un premier conduit inférieur parallèle à la plaque et transversal à chacun des logements 20, que complète, à partir du fond de chacune des chambres 22 un second conduit intersectant le premier. De manière complémentaire est ménagé, dans chaque cylindre 50, un conduit 51 venant en correspondance et amenant le fluide hydraulique devant le piston 54. Des joints d'étanchéité 56 garnissent le pourtour du piston et l'intérieur du cylindre. Un joint circulaire trapézoïdal 57 complète cette étanchéité notamment au niveau des poussières éventuelles. Un ressort 59 prend appui d'une part contre la face interne du couvercle 24 et d'autre part contre l'intérieur du piston 54 pour maintenir celui-ci normalement en position rentrée. Une butée 34 empêche la rotation de la broche 36 d'avancer trop en avant et de se bloquer dans la face du piston.

Comme on peut aisément le comprendre, l'opérateur commence par tourner la broche 36 afin de faire avancer le coulisseau 30 avec son mors mobile 40 jusqu'en position contre la pièce à saisir. Puis, par injection de liquide hydraulique sous pression dans les conduits 52,51, le piston 54 tend à se déplacer sur la gauche tel qu'illustré sur la figure 3, contre l'effet du ressort 59 pour achever et parfaire le serrage de la pièce. Il suffit, par la suite, de relâcher la pression hydraulique dans le cylindre pour que le ressort 59 repousse vers la droite le piston 54, le tube taraudé 55 emmenant avec lui la broche 36 donc le coulisseau 30 avec le mors mobile 40. Ce desserrage a donc été immédiat.

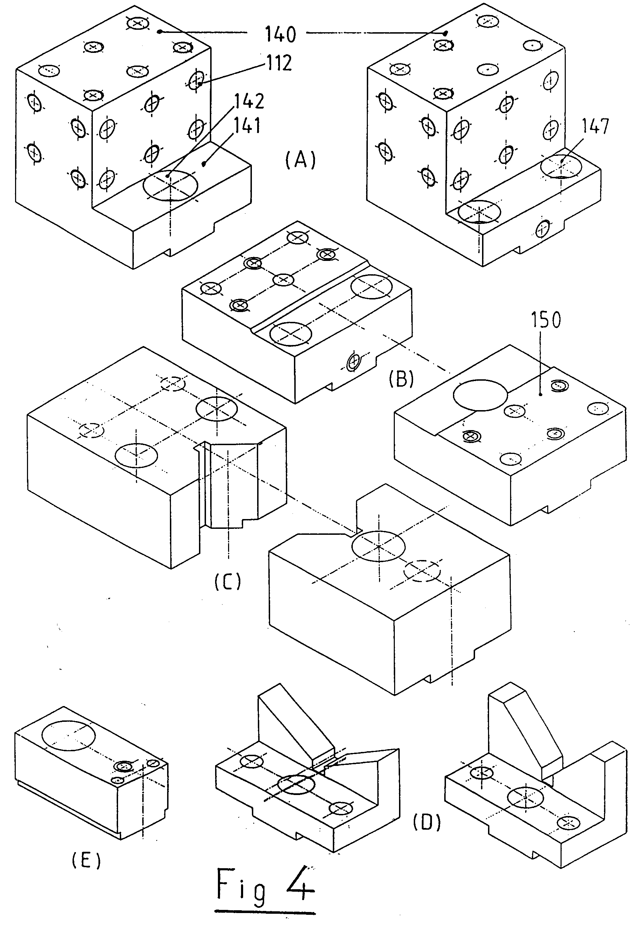

La figure 4a illustre une paire de mors 140 de forme générale cubique dont les faces latérale, supérieure et frontale présentent un maillage d'orifices taraudés 112 pour le positionnement et la fixation de butées réglables complémentaires ou autres réglettes d'appui en coin ou obliques. La base de ce mors présente une extension 141 frontale et horizontale dans laquelle est ménagé un orifice 142 (ou une paire d'orifices 147) pour la vis de fixation 42 (ou 47). Un perçage est également ménagé dans la face inférieure pour l'installation de la goupille 41 de maintien dans le sens axial. La surface inférieure peut également présenter un tenon s'engageant, pour guidage longitudinal, dans l'ouverture supérieure du logement 20 lorsque la surface supérieure du coulisseau n'affleure pas celle de la plaque modulaire.

Ces mors cubiques peuvent être réalisés en des dimensions particulièrement larges : notamment supérieures à la valeur de l'entraxe entre 2 coulisseaux si désiré. En effet, le dispositif d'entraînement hydraulique, voire un dispositif d'amplification mécanique de force, étant installé à l'intérieur de la chambre 22 située tout à l'extrémité du logement 20, une place importante est disponible dans ce logement pour le coulisseau 30 qui peut alors être long. Un coulisseau long permet de supporter des efforts de fléchissement beaucoup plus importants, notamment ceux induits par une force appliquée dans la partie supérieure de ce mors cubique maillé 140.

Sur la figure 4b est illustrée une paire de mors 150 ayant la forme de plaques basses dont la surface supérieure est maillée d'orifices. Les dimensions de ces plaques peuvent, si désiré, être également importantes. On peut rapporter sur de telles plaques un ensemble d'éléments d'appui complémentaires selon la forme complexe de la surface de la pièce en vis-à-vis, tout cet ensemble saisissant alors cette pièce en une fois avec puissance.

Sur la figure 4c est illustrée une paire de mors en V horizontaux adaptés au maillage particulier du coulisseau : orifices à la fois pour les vis de fixation 42,47 et les goupilles d'arrêt 41,46. La figure 4e illustre un mors mobile particulièrement étroit pour laisser une place importante disponible au passage des outils de coupe.

Sur les figures 4d sont illustrés deux appuis en V verticaux complétant la gamme des éléments permettant la réalisation d'un isostatisme parfait entre deux mors.

La figure 5 illustre, en perspective, le premier coulisseau d'une plaque modulaire selon l'invention complété d'un mors cubique 140, lui-même garni d'une réglette d'appui oblique 162 sur sa face supérieure, et ce en face d'un montage identique fixé sur la plaque modulaire. Les réglettes d'appui et de serrage mobiles peuvent servir au serrage de plaques-palettes.

La figure 6 illustre, également en perspective, l'exemple d'une plaque ne comprenant qu'un unique coulisseau, réduite au minimum dans sa largeur, et garnie sur sa face supérieure d'un jeu complet d'éléments d'appui et de serrage pour un maintien équilibré d'une pièce non représentée. Dans ce montage, les mors fixe et mobile de type "bas" 150 sont chacun complété de deux règles de serrage, une frontale "basse" 163 et une antérieure "haute" 161, ce qui donne à l'ensemble une allure en escalier. Une butée verticale centrale 170 complète le milieu de la face frontale du mors fixe. Deux appuis coulissants 175 sont réglés et fixés par des boulons introduits dans des orifices 12 adjacents aux coulisseaux. Une règle d'appui 166 est disposée au milieu des mors en travers du déplacement du coulisseau sans gêner le mouvement de ce dernier.

Ces exemples illustrent la facilité et la grande souplesse dans la conception et l'élaboration de pièces de serrage complexes assurant finalement un serrage puissant et équilibré.

De manière générale, on aura particulièrement noté l'aspect symétrique du logement 20 avec ses deux chambres d'extrémité 22 et 22' permettant, selon les besoins, d'inverser latéralement la position du mors fixe et du mors mobile avec son coulisseau. Si la figure 1 illustre un mode de réalisation à partir d'une plaque modulaire 10 sensiblement carrée et garnie de quatre coulisseaux parallèles 30, on peut également envisager une demi-plaque modulaire rectangulaire ne comprenant que deux coulisseaux pour serrer des pièces de moindre importance, ou encore une plaque modulaire plus petite ne comprenant qu'un seul coulisseau tel que déjà illustré sur la figure 6. Cette dernière plaque peut, si nécessaire, être installée sur le chant pour accomplir alors un serrage par côté. A l'inverse, on peut également envisager une plaque modulaire plus longue complétée de six ou huit coulisseaux parallèles pour le maintien de pièces longitudinales importantes.

Pour des fraiseuses, aléseuses ou autres machines-outils à broche horizontale, on peut également envisager la réalisation de blocs cubiques ou d'équerres double face de maintien comprenant plusieurs logements 20 dans chacune des faces utiles verticales, par exemple une paire de logements par face verticale du cube.

Un autre avantage non moins important du dispositif est qu'il est toujours possible de revenir partiellement ou totalement à une plaque maillée standard en remplaçant un coulisseau mobile 30 par une pièce dont la face supérieure affleure la surface de la plaque 10, cette surface supérieure étant elle-même complétée d'une rangée médiane d'orifices rigoureusement identiques aux orifices 12 de la plaque modulaire 10.

Comme on a pu le constater à la lecture de cet exposé, cette invention permet d'accroître sensiblement la performance d'une plaque modulaire à éléments de serrage rapportés sur laquelle on peut aisément respecter les règles de l'isostatisme, et ce par intégration de moyens de serrage complémentaires puissants, rapides et eux-mêmes polyvalents grâce à des mors eux-mêmes maillés.

## Revendications

1. Dispositif de positionnement et de serrage modulaire comprenant une plaque (10) prévue pour être installée sur une table ou un bloc de maintien d'une machine-outil et comprenant,
dans son épaisseur, au moins un logement (20) parallèle à la surface, de section transversale en forme de T renversé ouvert dans sa partie supérieure, et traversant une longueur ou une largeur de la plaque,
ce logement contenant un coulisseau mobile (30) de section transversale en T inversé complémentaire à celui du logement, ce coulisseau pouvant être déplacé grâce à des moyens mécaniques (36,39) ou hydrauliques (36,50,54),
caractérisé en ce que
la plaque présente, sur sa surface, au moins une première série d'orifices (12) de part et d'autre du logement (20) pour le montage en une position prédéterminée d'un mors fixe (45), et si désiré d'éléments de positionnement,
et en ce que le coulisseau (30) présente une longueur au moins supérieure à la moitié de la longueur du logement, ainsi que, sur sa surface supérieure, une seconde série d'orifices (44) pour la fixation en une position prédéterminée d'un mors mobile (40) en vis-à-vis du mors fixe.

2. Plaque selon la revendication 1, caractérisée en ce que la partie supérieure de l'extrémité du coulisseau (30) proche du mors fixe (42) est prolongée par une plaque horizontale (32) passant dans une rainure ménagée dans la surface de la plaque (10).

3. Plaque selon la revendication 1, caractérisée en ce que les mors mobile (40) et fixe (45) ont une hauteur supérieure à 4 cm, et en ce que leurs faces en vis-à-vis sont complétées par un maillage d'orifices ou de rainures pour le montage d'éléments complémentaires de positionnement et/ou de stabilisation des pièces à usiner.

4. Plaque selon la revendication 1, caractérisée en ce que les mors fixe et mobile (150) sont parallélépipédiques aplatis et présentent sur leur surface supérieure un maillage d'orifices (12).

5. Plaque selon la revendication 1, caractérisée en ce que les mors fixe et mobile (140) sont parallélépipédiques et présentent un maillage d'orifices sur leurs faces latérale, supérieure et frontale.

6. Plaque selon l'une des revendications 1 à 5, caractérisée en ce que la sortie du logement (20) est constituée d'une chambre (22) pour l'aménagement de moyens complémentaires interchangeables de déplacement mécanique ou hydraulique du coulisseau ou d'amplification mécanique de serrage.

7. Plaque selon la revendication 6, caractérisée en ce que le coulisseau est solidaire d'une broche (36) mobile en rotation dont l'extrémité filetée est engagée dans un taraudage (38) d'une pièce fixe (39) située dans la chambre (22) à l'extrémité du logement (20).

8. Plaque selon la revendication 6, caractérisée en ce qu'un conduit (52) hydraulique est ménagé à demeure dans l'épaisseur de la plaque (10) et débouche au fond de la chambre (22) de chaque logement (20).

9. Plaque selon la revendication 8, caractérisée en ce que des moyens complémentaires de déplacement hydraulique du coulisseau (30) comprennent un cylindre (50) positionné au fond de la chambre (22) par un couvercle de fermeture (24) de telle sorte que son conduit hydraulique interne (51) soit en correspondance avec le conduit de la plaque (52), cylindre (50) contenant un piston (54) prolongé en son extrémité orientée vers l'intérieur du logement (20) par un tube taraudé (55) dans lequel est engagée l'extrémité de la broche (36), lequel piston est maintenu en position rentrée par des moyens de rappel (59) prenant appui contre le couvercle (24).

10. Plaque selon l'une des revendications précédentes, caractérisée en ce que le coulisseau et ses moyens de déplacement peuvent être démontés hors du logement (22) afin de permettre l'accès à des moyens de fixation (15) ménagés dans la base de ce logement prévus pour l'installation de la plaque (10) dans la table ou sur le bloc de maintien de la machine-outil.

11. Plaque selon l'une des revendications précédentes, caractérisée en ce que le maillage d'orifices (12), ou de rainures prévus pour le montage d'éléments de positionnement et de serrage comporte des rainures (19) ou des suites longitudinales d'orifices (14) dont les positions dans la surface de la plaque sont calibrées.

## Claims

1. A modular positioning and securing device comprising a plate (10) designed to be installed on a table or holding device on a machine tool and comprising,
in its depth, at least one housing (20) parallel to the surface, of inverted T cross-section, open at its top and passing through the length or width of said plate,
said housing containing a moving slide (30), of inverted T cross-section complementary to that of the housing, said slide being able to be moved by mechanical or hydraulic means (36,39; 36,50,54 respectively),
characterized in that
said plate has, on its surface, at least one first series of orifices (12) on either side of the housing (20) for mounting a fixed jaw (45) and, if desired, positioning components in a predetermined position,
and wherein said slide (30) has a length at least greater than half the length of said housing, and a second series of orifices (44) on its top surface for fixing a moving jaw (40) in a predetermined position facing the fixed jaw.

2. Plate according to claim 1, wherein the upper part of the end of the slide (30) adjacent to the fixed jaw (42) is extended by a horizontal plate (32) passing in a groove provided in the surface of the plate (10).

3. Plate according to claim 1, wherein said moving and fixed jaws (40,45) have a height greater than 4 cm, and wherein their opposing faces are supplemented by a grid of orifices or grooves for mounting complementary components for positioning and/or stabilizing the parts to be machined.

4. Plate according to claim 1, wherein said fixed and moving jaws (150) are flattened parallelepipeds and have on their top surface a grid of orifices (12).

5. Plate according to claim 1, wherein said fixed and moving jaws (140) are parallelepipedic and have a grid of orifices on their side, top and front faces.

6. Plate according to one of claims 1 to 5, wherein said outlet from the housing (20) consists of a chamber (22) for receiving complementary interchangeable means for the mechanical or hydraulic movement of said slide or for mechanical amplification of said clamping.

7. Plate according to claim 6, wherein said slide is secured to a spindle (36), movable rotationally, the threaded end of which is engaged in a tapping (38) in a fixed piece (39) situated in said chamber (22) at the end of the housing (20).

8. Plate according to claim 6, wherein a hydraulic pipe (52) is permanently provided in the depth of said plate (10) and opens out at the bottom of the chamber (22) of each housing (20).

9. Plate according to claim 8, wherein additional means for the hydraulic movement of said slide (30) comprise a cylinder (50) positioned at the bottom of said chamber (22) by a closing cover (24) so that its internal hydraulic duct (51) connects with a duct in said plate (52), a cylinder (50) containing a piston (54) extended, at its end oriented towards the inside of said housing (20), by a tapped tube (55) in which the end of a spindle (36) is engaged, which piston is held in retracted position by biasing means (59) bearing against said cover (24).

10. Plate according to any one of the preceding claims, wherein said slide and its means of movement can be removed from said housing (22) in order to allow access to fixing means (15) provided in the base of said housing for the installation of said plate (10) in the table or on the holding block of the machine tool.

11. Plate according to any one of the preceding claims, wherein the grid of orifices (12) or grooves for mounting the positioning and gripping components includes grooves (19) or longitudinal series of orifices (14) whose positions in the surface of the plate are calibrated.

## Patentansprüche

1. Modulare Vorrichtung zum Ausrichten und Halten mit einer Grundplatte (10), die dazu vorgesehen ist, auf einem Tisch oder auf einem Halteblock einer Werkzeugmaschine angeordnet zu werden, und die in ihrer Tiefe über mindestens eine parallel zur Oberfläche angeordnete Aufnahme (20) verfügt, die im Querschnitt die Gestalt eines umgekehrten und in seinem oberen Bereich oben offenen T aufweist und die eine Längsseite oder eine Querseite der Grundplatte (10) durchquert, wobei diese Aufnahme einen beweglichen Schlitten (30) aufnimmt, dessen Querschnitt die Gestalt eines umgekehrten und zu dem T der Aufnahme komplementären T aufweist, wobei dieser Schlitten mit Hilfe von mechanischen (36, 39) oder hydraulischen (36, 50, 54) Mitteln bewegbar ist,
**dadurch gekennzeichnet**, daß
die Grundplatte auf ihrer Oberfläche über mindestens eine erste Abfolge von Öffnungen (12) verfügt, die auf beiden Seiten der Aufnahme (20) zur Montage einer festen Spannbacke (45) und von eventuellen Positionierelementen in einer vorbestimmten Position vorgesehen sind, und daß der Schlitten (30) eine Länge aufweist, die zumindest größer als die Hälfte der Länge der Aufnahme ist, sowie auf der oberen Oberfläche über eine zweite Abfolge von Öffnungen (44) verfügt, die zur Befestigung einer beweglichen Spannbacke (40) in einer vorbestimmten Position gegenüber der festen Spannbacke vorgesehen sind.

2. Grundplatte nach Anspruch 1, dadurch gekennzeichnet, daß der obere Bereich des Endes des Schlittens (30) in der Nähe der festen Spannbacke (42) durch eine horizontale Platte (32) verlängert wird, die in einer Furche in der Oberfläche der Grundplatte (10) eingepaßt ist.

3. Grundplatte nach Anspruch 1, dadurch gekennzeichnet, daß die bewegliche (40) und die feste (45) Spannbacke eine Höhe von mehr als 4 Zentimeter aufweisen und daß ihre sich gegenüberliegende Seiten durch ein Netzwerk von Öffnungen oder Rillen vervollständigt sind, um zusätzliche zur Positionierung und/oder zur Stabilisierung der zu bearbeitenden Werkstücke vorgesehene Elemente zu montieren.

4. Grundplatte nach Anspruch 1, dadurch gekennzeichnet, daß die bewegliche und die feste Spannbacke (150) quaderförmig abgeflacht sind und auf der Oberfläche der Oberseite über ein Netzwerk von Öffnungen (12) verfügen.

5. Grundplatte nach Anspruch 1, dadurch gekennzeichnet, daß die bewegliche und die feste Spannbacke (140) quaderförmig sind und über ein Netzwerk von Öffnungen auf ihren Oberflächen der Querseiten, der Oberseite und der Vorderseite verfügen.

6. Grundplatte nach einem der Ansprüche 1 bis 5, dadurch gekennzeichnet, daß der Ausgang des Schlittens (20) aus einer Kammer (22) zur Aufnahme von zusätzlichen austauschbaren Mitteln zur mechanischen oder hydraulischen Verschiebung des Schlittens oder der mechanischen Verstärkung des Haltens besteht.

7. Grundplatte nach Anspruch 6, dadurch gekennzeichnet, daß der Schlitten mit einer in der Rotation beweglichen Spindel (36) einstückig ausgestaltet ist, deren gewindetes Ende in einem Innengewinde (38) eines festen Elementes (39) eingreift, welches in der Kammer (22) am Ende der Aufnahme (20) angeordnet ist.

8. Grundplatte nach Anspruch 6, dadurch gekennzeichnet, daß eine Hydraulikleitung (52) in der Tiefe der Grundplatte (10) auf Dauer eingelassen ist und am Ende der Kammer (22) jeder Aufnahme (20) mündet.

9. Grundplatte nach Anspruch 8, dadurch gekennzeichnet, daß zusätzliche Mittel zur hydraulischen Bewegung des Schlittens (30) einen Zylinder (50) umfassen, der am Ende der Kammer (22) durch einen Verschlußdeckel (24) in solch einer Weise angeordnet ist, daß seine innere Hydraulikleitung (51) in Verbindung mit der Hydraulikleitung (52) der Grundplatte steht, wobei der Zylinder (50) über einen Kolben (54) verfügt, der an dem Ende, das in das Innere der Aufnahme (20) gerichtet ist, durch ein gewindetes Rohr (55) verlängert wird, in das das Ende der Spindel (36) eingreift, wobei der Kolben durch Rückholmittel (59), die sich gegen den Deckel (24) abstützen, in der eingefahrenen Position gehalten wird.

10. Grundplatte nach einem der vorstehenden Ansprüche, dadurch gekennzeichnet, daß der Schlitten und seine zu seiner Bewegung vorgesehenen Mittel aus der Aufnahme (22) ausgebaut werden können, um einen Zugang zu den Befestigungsmitteln (15) zu gestatten, die in der Basis der Aufnahme vorgesehen sind, um den Aufbau der Grundplatte (10) in den Tisch oder auf den Halteblock der Werkzeugmaschine zu ermöglichen.

11. Grundplatte nach einem der vorstehenden Ansprüche, dadurch gekennzeichnet, daß das Netzwerk von Öffnungen (12) oder der Rillen zur Montage der Positionier- und Halteelemente über Rillen (19) oder über longitudinal ausgerichtete Abfolgen von Öffnungen (14) verfügt, deren Position in der Oberfläche der Grundplatte kalibriert sind.
